# EUROPEAN PATENT APPLICATION

(11) **EP 1 278 110 A2**
(43) Date of publication of application: **22.01.2003**
(21) Application number: 02015853.1
(22) Date of filing: 16.07.2002
(51) Int. Cl.: G05B 19/4097

(54) **CAD systems and methods**

(30) Priority: 19.07.2001 JP 2001220583
(71) Applicant: Toyota Caelum Incorporated, Nagoya-shi, Aichi-ken, 460-0008 (JP)
(72) Inventor: Kawai, Motomasa, Nagoya-shi, Aichi-ken, 460-008 (JP); Rimoldi, Attilio, San Jose, California 95119 (US); Bassi, Gian Paolo, San Jose, California 95119 (US)
(74) Representative: Winter, Brandl, Fürniss, Hübner, Röss, Kaiser, Polte Partnerschaft

(57) **Abstract**

The shape information control device (11) for processing the input/output and forming of shape data expressing a shape for each application of a product performs various procedures based on the input data from an input device (17) and outputs an obtained shape data to an output device (18). The device (11) refers to shape information files (12-16) for each shape expressing a product model as a product basic shape and other shape models, such as an analysis model derived from the product model. In these information files, a plurality of forming commands which express each shape are stored without redundancy. The device (11) further refers to a shape information file for expressing the product model as the basic shape in addition to the shape information file expressing the shape model. Thus by effectively controlling the shape of each desired model, a simple model forming can be made.

## Description

### BACKGROUND OF THE INVENTION

### 1. Field of Invention

The present invention relates to a computer-aided-design (CAD) system and methods for designing, for example, automobile parts.

### 2. Description of Related Art

Recently, when designing products (parts) for automobiles, a CAD system has been widely used as a design system assisted by a computer. This design system using the CAD system enables a simulation that makes correcting or changing data more easier as compared to the product designing on paper. The CAD system also enables a user to easily use or refer to previous data. Thus, the CAD system has various advantages as mentioned above.

On the other hand, when designing a product by using the CAD system, it is necessary to form models for various applications of the product process through manufacturing a final product. The following are as some samples of such model:
(1) Product model: a model which is designed by a product engineer and which does not include any fillet or formability considerations for the following process.
(2) Analysis model: a model omitting the detail shape of the product model above and used for analysis purpose.
(3) Final product model: a model expressing the final shape of the product including detailed fillets and inclinations.
(4) Mold processing (machining) model: a model incorporating the formability considerations into the above final product model.
(5) Raw material model: a model for forming a raw material, omitting detailed shape such as holes from models (3) or (4) above, and adding processing or machining allowance.

It should be noted here that the term "fillet" can mean a machining treatment that gives a roundness to corners to improve the outer appearance of the product or to assure the safety thereof, or it can mean a shape formed by such a treatment.

These models are necessary to design a product and generally conventional CAD data of these models includes data which expresses the various shapes for each application of the product. The CAD data necessary for each model to design the product are interrelated with one another, but are formed independently for each model. Furthermore, one data for a model can be copied to be appropriated to another data for another model. Accordingly, the data of each model to be controlled can be redundant or lengthy, and has the following problems:
(A) An inevitable increase in the designing man-hour and modeling man-hour.
(B) Necessary changes related models upon design changes and an increase in man-hours upon design change is not negligible.
(C) A longer development period.
(D) Mistakes or errors may occur frequently which can lead to increase in changes to the manufacturing mold.

Thus, the conventional CAD system has a tendency to increase designing man-hour (labor costs) and designing costs.

### SUMMARY OF THE INVENTION

Considering the above problems, it is one object of the present invention to provide a CAD system and methods which enable a simple model forming process by effectively controlling each desired model shape.

According to the invention, the CAD system and methods according to the invention form shape models for various applications of the subject product to be manufactured and have a plurality of shape forming function information including forming commands necessary for expressing each shape for each application to form each shape model corresponding to each application based on a selection from the plurality of shape forming function information.

According to this structure of the CAD system of the invention, the expression of a shape model for each application is described by the plurality of the shape forming function information that includes forming commands and is based on the selection of each shape forming function information. Therefore, the shape model can be easily formed for each application. Thus, basically without restricting input order of the shape forming function information, the shape model forming can be achieved with high flexibility based on the additions or changes of those shape forming function information.

According to a further aspect of the invention, in the CAD system, a shape of the shape model for the applications is defined by derivation from a basic shape and preferably, the shape forming function information of the formed shape model for the applications is defined as a set of forming commands corresponding to the basic shape and a forming command that corresponds to a shape derived from the basic shape.

According to the above structure, in the shape model for each application, a shape for the applications is defined corresponding to the shape derived from the basic shape. The shape forming function information for expressing the respective models can be structured by the forming commands expressing the basic shape and the forming commands expressing the shape derived from the basic shape which correspond to the definitions of the basic shape and the shape defined by the shape derived from the basic shape, respectively. Thus, the basic shape and the shape defined by the shape derived from the basic shape are expressed by independent and non-redundant shape forming function information keeping the relationship between the basic shape and the shape derived from the basic shape.

According to still a further aspect of the invention, in the CAD system, it is preferable that the set of the forming commands that corresponds to the basic shape and the forming command that corresponds to the shape derived from the basic shape are predetermined in advance and the application for the shape model to be formed is specified to automatically set a combination of the specified applications of the predetermined forming command as the shape forming function information.

Normally, electronic files prepared by the CAD system are stored in a memory of a computer and these files are copied and edited as desired to be handled as a CAD data for a new shape. On the contrary, according to the structure of the invention described above, forming command for the application is prepared and when an application for a shape model is specified or designated, the combination of the set of the forming commands and the forming command prepared in advance is automatically set as the shape forming function information which expresses the shape for the specified application. Therefore, for example, the combination of the electronic files which include the forming commands stored in the memory and shape forming function information expressing the shape models for corresponding applications by editing the files are prepared in advance and by specifying the application of the desired shape model to be formed, such desired shape model can be expressed. Thus it can effectively utilize the previously accumulated CAD data.

According to a further aspect of the invention, in the CAD system, it is preferable to copy the set of the forming commands that are prepared in advance by designating the shape model is stored in a location to be copied upon coping copying the shape model for each application.

According to the above structure, it can freely edit the shape to be copied and formed, when the set of the forming commands that are prepared in advance by designating the shape model is copied in a location to be copied upon coping copying the shape model for each application.

According to a further aspect of the invention, in the CAD system, the summary of the feature is that the forming command corresponding to the basic shape and the forming command corresponding to each shape derived from the basic shape are stored as the separate electronic files, respectively.

According to the structure above, changes for the basic shape and the changes for each shape derived from the basic shape are independently made. When the judgment whether the change can be allowed or not is made in accordance with the person who changes in each independently and separately kept electronic file, it can prevent in advance any unintended change or erroneous change to the electronic files.

### BRIEF DESCRIPTION OF THE DRAWINGS

The above mentioned and other objects, features, advantages, technical and industrial significance of the invention will be better understood by reading the following detailed description of preferred embodiments of invention, when considered in connection with the accompanying drawings, in which:
Fig. 1 is a block diagram of a system structure of an embodiment of an exemplary CAD system according to the invention;
Fig. 2 is a conceptual view showing an exemplary deriving relation of the shape model according to the embodiment of the invention;
Fig. 3 is a flowchart showing an exemplary inputting procedure of the basic element command according to the embodiment of the invention;
Fig. 4 is a flowchart showing an exemplary inputting procedure of the process element command according to the embodiment of the invention;
Fig. 5a is a perspective view of an exemplary product model according to the embodiment of the invention;
Fig. 5b is an explanation view of an exemplary product shape information expressing a product model according to the embodiment
Fig. 6a is a perspective view of an exemplary analysis model according to the embodiment of the invention;
Fig. 6b is an explanation view of an exemplary product shape information expressing an analysis model according to the embodiment;
Fig. 6c is an explanation view of an exemplary analysis model of a n analysis shape information according to the embodiment;
Fig. 7a is a perspective view of an exemplary final product model according to the embodiment of the invention;
Fig. 7b is an explanation view of an exemplary product shape information expressing a final product model according to the embodiment; and
Fig. 7c is an explanation view of an exemplary final product shape information expressing a final product model according to the embodiment.

### DETAIL DESCRIPTION OF THE PREFERRED EMBODIMENTS

In the following description and the accompanying drawings, the present invention will be described in more detail with reference to exemplary, preferred embodiment.

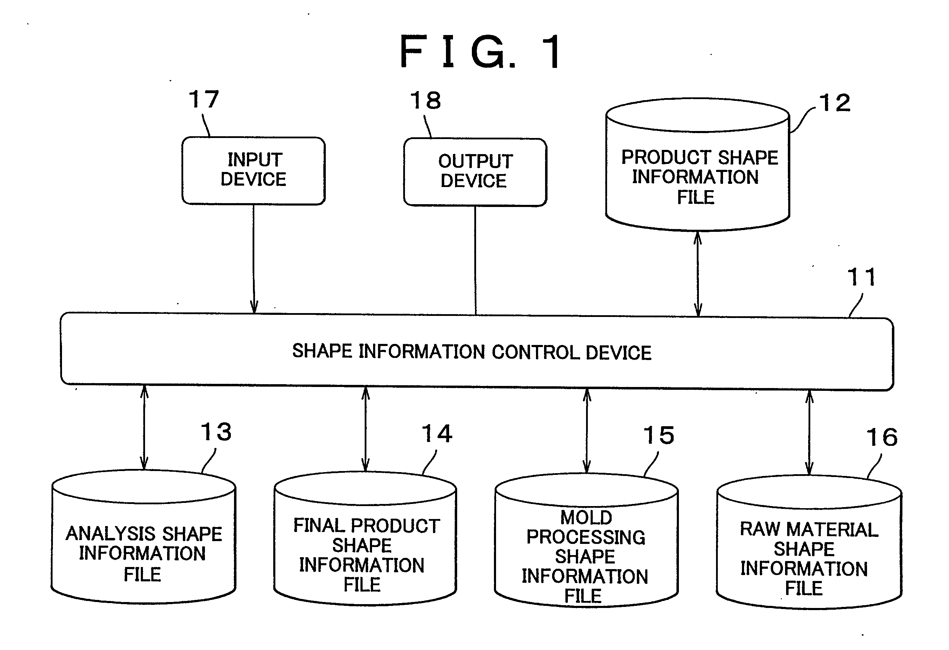

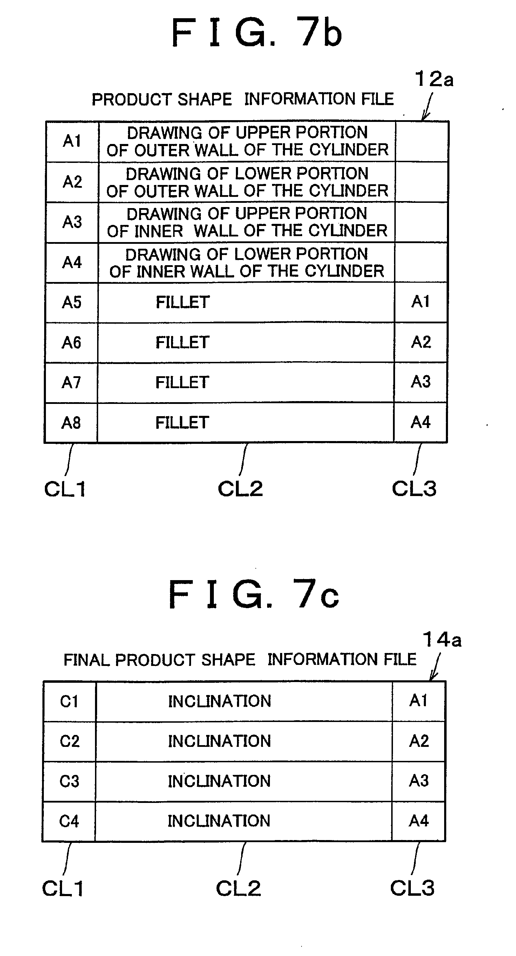

In Figs. 1 through 7a, 7b, and 7c, an embodiment of the CAD (Computer Aided Design) system according to the invention will be explained. In this embodiment, the product (part) shapes for the designing subject applied for the models described in the above items (1) through (5) are formed by using the CAD system. The models include a product model, analysis model, final product model, mold processing model, and a raw material model.

As shown in Fig. 1, the CAD system is constructed by a shape information control device 11 which performs input/output processing of shape data expressing the shape of the product and shape forming processing. The system also includes an input device 17, output device 18 and an information file for each product shape housing shape forming function information expressing the product shape for each application as forming command for each drawing element.

The input device 17 is formed by a keyboard and pointing device to input the letter information and a drawing information to the shape information control device 11. The output device 18 is formed by a display and a printer to output the information from the shape information control device 11 with an appropriate format.

The information file for each shape houses a forming command of the shape forming function information to express the product shape for each application explained in the above models (1) through (5) without having any redundancy, and is stored in an accessible memory device by the shape information control device 11. These information files for each shape is formed by a product shape information file 12, an analysis shape information file 13, a final product shape information file 14, and a mold processing shape information file 15, and a raw material shape information file 16.

The shape information control device 11 includes a computer system having a microprocessor, various memories, etc. The shape information control device 11 reads and writes the forming command as each shape forming function information for each file 12 through 16 based on the input from the input device 17 and also outputs the processing results to the output device 18.

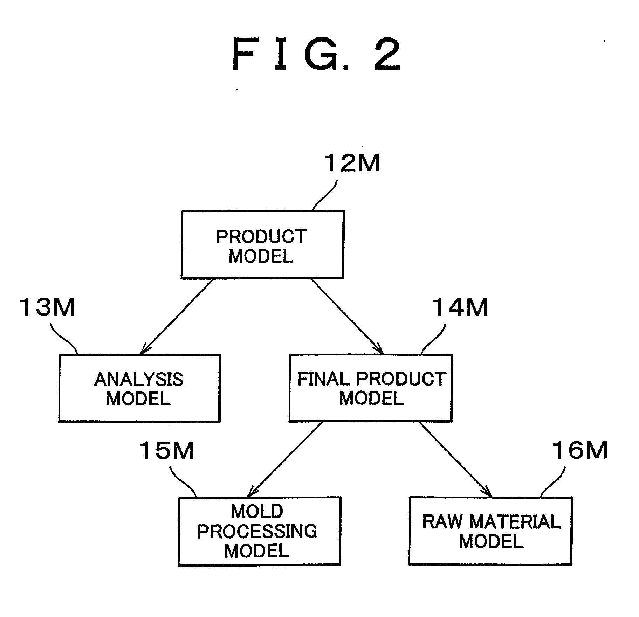

Fig. 2 shows a conceptual view showing an example of a deriving relation of the basic shape of the shape model corresponding to each application and a shape derived from the basic shape. Among the models, a product model 12M expresses the basic shape of a product which functions as a product. An analysis model 13M and a final product model 14M are derived from the product model 12M, and a mold processing model 15M and a raw material model 16M are derived from the final product model 14M.

In order to express the product model 12M which is the basic model, the forming command is stored in the corresponding product shape information file 12 as the shape forming function information to express the basic shape. In the shape information file 12 for each shape which stores the forming command expressing the model derived from the product model 12M, only the forming command expressing the difference between the model to be formed and the model from which the model to be formed is derived, is stored. For example, the analysis shape information file 13 which stores the forming command expressing the analysis model 13M stores only the forming command expressing the difference with the product model 12M from which the analysis model is derived. The shape information control device 11 outputs the shape data expressing the analysis model 13M to the output device 18 formed by referring to both the product shape information file 12 and the analysis shape information file 13. Similarly, the final product shape information file 14 stores the forming command expressing the difference between the product model 12M and the final product model 14M. The mold processing shape information file 15 stores the forming command expressing the difference between the final product model 14M and the mold processing model 15M. The shape information control device 11 outputs the shape data expressing the mold processing model 15M to the output device 18 formed by referring to the product shape information file 12, the final product shape information file 14, and the mold processing shape information file. Similarly, the shape information control device 11 outputs the shape data expressing the raw material model 16M to the output device 18 formed by referring to the product shape information file 12, the final product shape information file 14, and the raw material shape information file 16.

These information relating to the deriving relation of the shape models for each application is controlled by the shape information control device 11 which forms the shape data. By referring to this information, the shape information control device 11 can form the shape data accurately by expressing the shape models for each application.

The forming commands as the shape forming function information to be stored in each shape information file 12 through 16 are formed by a basic element command which is independent from the other command, and a process element command which expresses processing procedures for the forming command associated with the other commands.

The following explains the procedures of the process of the basic element command and the process element command performed by the shape information control device 11.

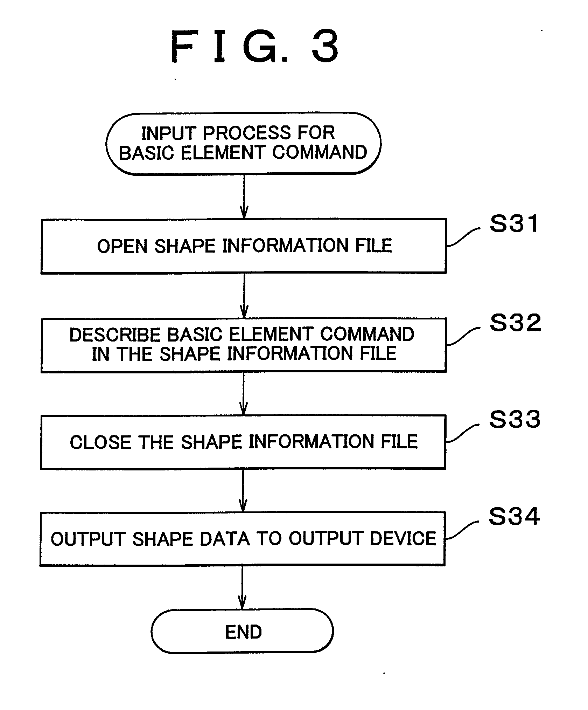

In Fig. 3, an exemplary input process for the basic element command is shown by a flowchart. As shown in Fig. 3, when the basic element command is input from the input device 17, the shape information control device 11 opens the shape information file corresponding to the application model to be formed (Step S31). The basic element information input in Step S31 is described in the opened shape information file on a predetermined format (Step S32), and closes the file (Step S33). The shape information control device 11 then forms the shape data expressing the model by referring to the shape information file described with the basic element command and outputs the data to the output device 18 (Step S34). If the subject model is different from the product model 12a expressing the basic shape of the product, the shape information control device 11 further refers to another information file which has a deriving relation with the subject model upon forming the shape data.

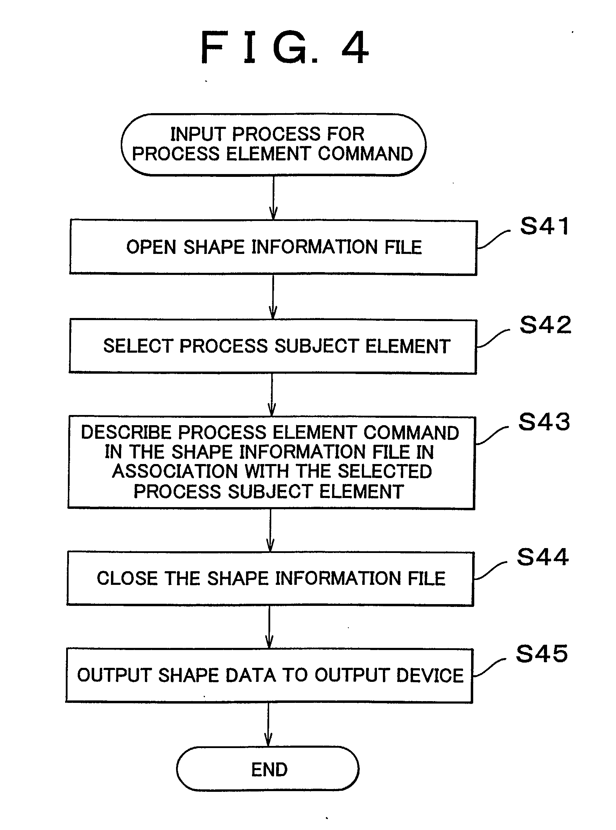

Fig. 4 shows a flowchart showing the exemplary process element command input procedure. As shown in Fig. 4, as similar to the input procedure of the basic element command, when the process element command is input from the input device 17, the shape information control device 11 opens the information file corresponding to the application model to be formed (Step S41). Following this step, the shape information control device 11 selects the drawing of the designated subject process (process subject element) (Step S42) and the process element command is described in the opened shape information file in a manner associated with the process subject element (Step S43). Then, the shape information control device 11 closes the file (Step S44). The shape information control device 11 then forms the shape data expressing the model by referring to the shape information file described with the process element command and outputs the data to the output device 18 (Step S45).

If the subject model is different from the product model 12a, for example, with the analysis model, the final product model, the mold processing model, and the raw material model, the shape information control device 11 (as explained in the basic element command input procedure) further refers to the respective information file which has a deriving relation with each subject model upon forming the shape data.

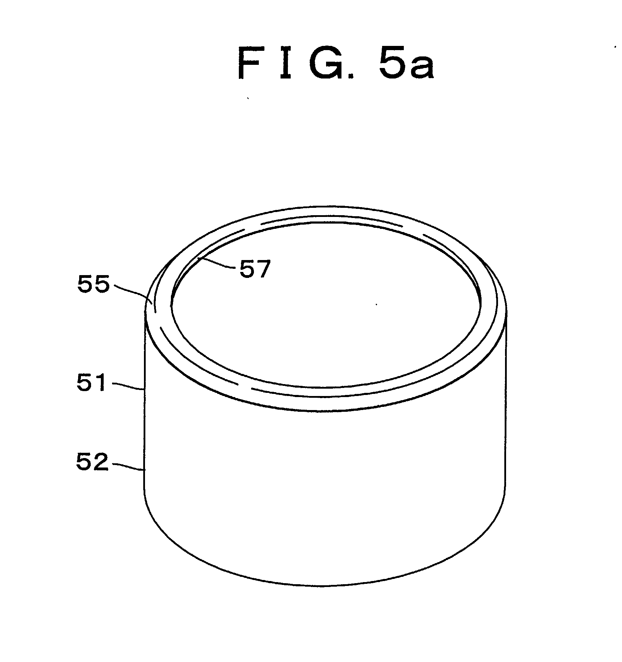

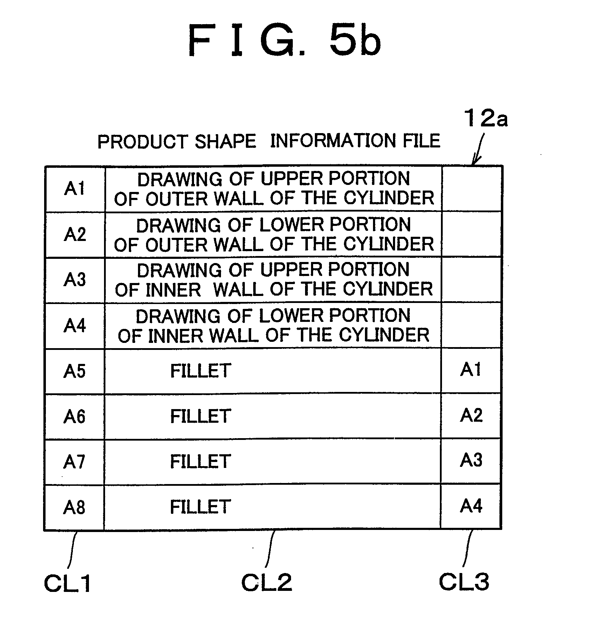

The system for expressing each model shape by the forming command as the shape forming function information will be explained as an example of a cylindrical part shown in Figs. 5a, 5b, and 5c through Figs. 7a, 7b, and 7c.

In Figs. 5a, 5b, and 5c, the product model as the basic shape of the cylindrical part is shown. Fig. 5a is a perspective view of the cylindrical part for forming CAD data, and Fig. 5b is a conceptual view expressing schematically the data structure of the product shape information 12a storing the forming command as the shape forming function information expressing the part. In Fig. 5b, the line indicated as CL1 stores the identification symbols for the forming command, the line indicated as CL2 stores the forming commands, and the line indicated as CL3 stores the identification symbols associated with the process subject element when the forming command is the process element command. It should be appreciated that the data structure shown in this product shape information file 12a is a representative example and the other data structure for the other shape information files are structured in the same manner.

When the drawing information regarding upper portion 51 of the outer wall of the cylindrical part is input from the input device 17, the shape information control device 11 opens the product shape information file 12a of the cylindrical part (Step S31 in Fig. 3) and describes the forming command (basic element command) to "draw upper portion of the outer wall of the cylinder"" in the file 12a (row of ID symbol A1, and Step S32 of Fig. 3). The shape information control device 11 then closes the file (Step S33 of Fig. 3), and then outputs the shape data based on the forming command to the output device 18 (Step S34 of Fig. 3). Similarly, when the drawing information regarding a lower portion 52 of the outer wall of the cylinder, an upper portion of inner wall of the cylinder, and a lower portion of the inner wall of the cylinder) is input from the input device 17, the shape information control device 11 describes the forming commands for the respective drawing in the cylindrical part product shape information file 12a (rows of ID symbols A2 to A4) and outputs the shape data based on the respective forming commands to the output device 18.

Next, when the upper portion 51 of the outer wall of the cylinder as the process subject element is selected from the input device 17 and the fillet process for the designated process subject element is input, the shape information control device 11 opens the shape information file 12a (Step S41 of Fig. 4), describes the "fillet" forming command in the file 12a associated with the ID symbol A1 (row of ID symbol A5 in Fig. 5b, Steps S42 and S43), and then closes the file 12a (Step S44 of Fig. 4). The shape information control device 11 subsequently forms the shape data based on the forming command and outputs to the output device 18 (fillet portion 55 of Fig. 5a and Step S45 of Fig. 4).

Similarly, when the lower portion 52 of the outer wall of the cylinder, upper portion of inner wall of the cylinder, and the lower portion of the inner wall of the cylinder) are selected as the process subject elements from the input device 17, and the fillet process for the selected respective process subject elements is input, the shape information control device 11 describes the forming commands for the respective process subject elements in the cylindrical part product shape information file 12a (rows of ID symbols A6 to A8 of Fig. 5b) and outputs the shape data based on the respective forming commands to the output device 18 (fillet portion 57, etc., of Fig. 5a).

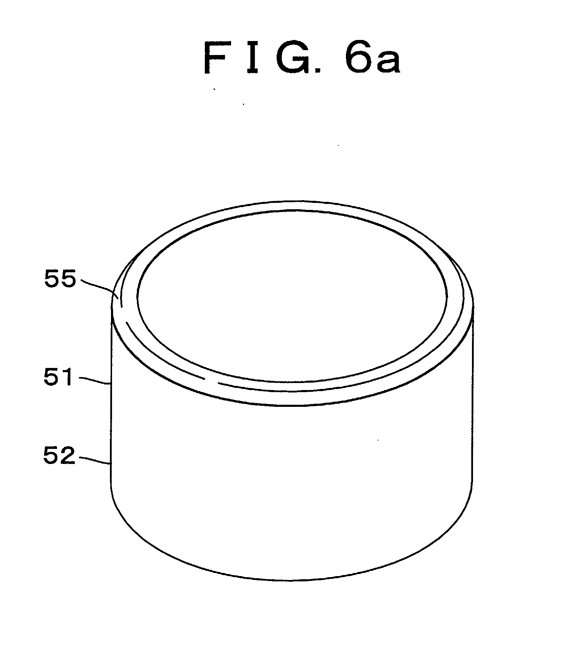

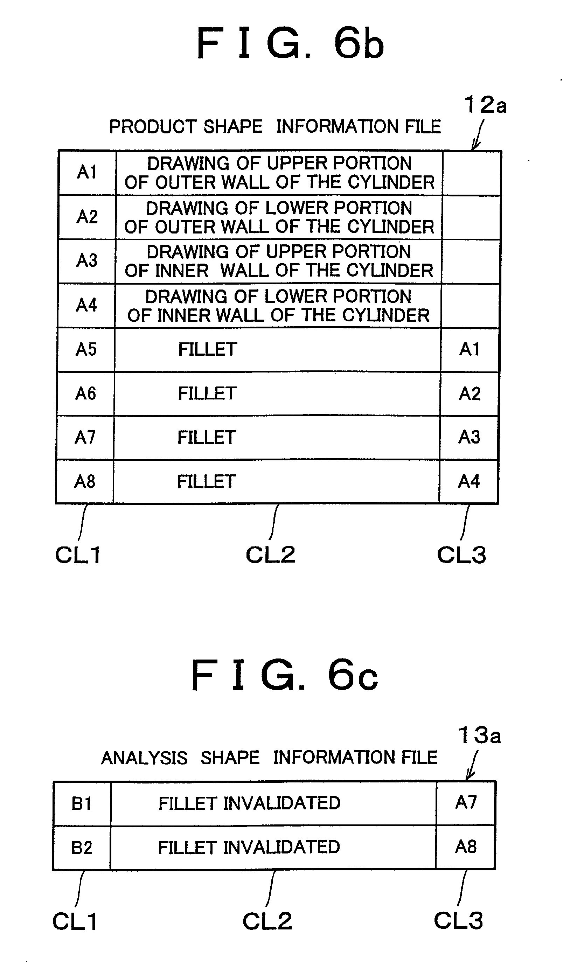

In Figs. 6a, 6b, and 6c, the analysis model of the cylindrical part is shown. Fig. 6a is a perspective view of the cylindrical part for forming as a CAD data. Moreover, Figs. 6b and 6c are conceptual views, respectively expressing the data structure of the product shape information 12a and the analysis shape information file 13a storing the forming commands as the shape forming function information expressing the part. As shown in the perspective view of Fig. 6a, the fillet of the inner wall of the cylinder is omitted as compared to the product model. In order to form the analysis model shape, first a shape to be formed as an analysis model of the cylindrical part is designated from the input device 17 in the CAD system. Subsequently, a fillet portion 57 of the inner wall of the cylinder as a process subject element is selected. When the input is made to invalidate the fillet process for the selected process subject element, the shape information control device 11 opens the analysis shape information file 13a (step S41 of Fig. 4), describes the forming command "invalidate the fillet process" associated with the ID symbol A7 of the product shape information file 12a in the analysis shape information file 13a (row of ID symbol B1 of Fig. 6c, Steps S42 and S43 of Fig. 4), and closes the file 13a (Step S44 of Fig. 4). The shape data based on this command is formed and output to the output device 18 with reference to the forming command previously formed in the product shape information file 12a. Similarly, the fillet portion of the inner wall of the cylinder is selected as the process subject element from the input device 17, and when the input is made to invalidate the fillet process for the selected process subject element, the shape information control device 11 describes the forming command in the analysis shape information file 13a (row of ID symbol B2 of Fig. 6c), forms the shape data based on the command, and outputs to the output device 18.

Thus the shape information control device 11 stores the command corresponding only to the shape forming function information expressing the difference between the product model and the analysis model and derived from the product model in the analysis shape information file 13a which expresses the analysis model.

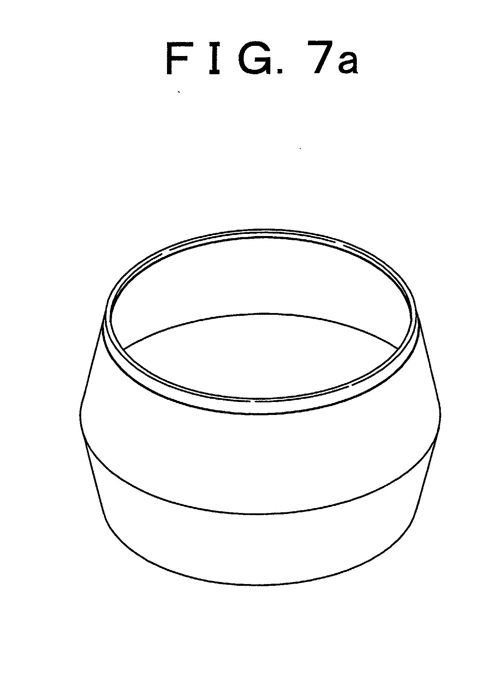

As shown in Figs. 7a, 7b, and 7c, the shape data for expressing the final product model of the cylindrical part is formed in the same manner with the forming of the analysis model as explained.

A designation is made in the CAD system that indicates the shape to be formed from now is the shape for the final product model of the cylindrical part from the input device 17. Then, when a process input to make an inclination on the cylinder as shown in Fig. 7a from the input device 17, the shape information control device 11 stores only the forming command that expresses the process associated with the process subject ID symbol (process element command) in the final product shape information file 14a (Fig. 7c). The shape information control device 11 forms and outputs to the output device 18 the shape data based on the forming command stored in the final product shape information file 14a with reference to the product shape information file 12a.

Similarly, only the difference with the final product model from which the mold processing and the raw material models are derived is stored as the forming commands corresponding to the reference for the forming data for respectively expressing the mold processing model and the raw material model in respective files.

The shape information control device 11 forms a model which is derived from the final product model and a model which is derived further from the product model with reference with the shape information files expressing the models, and outputs to the output device 18 the shape data thereof.

Thus the shape forming function information expressing the product model for each application cab be uniformly controlled by the shape information control device 11 without any redundancy, and the forming commands expressing the shape forming function information can be separately stored in the respective shape information files.

If any design change, such as improvement or designing of a similar product is necessary, the following procedure can be performed to easily achieve such design changes: For example, if the thickness of the cylindrical part has to be increased by reducing the inner diameter of the cylinder as shown in Fig. 5a, since the information referred to for expressing the model shape for all applications are only two commands indicated as ID symbols A3 and A4 (basic element command), inputs are made to change the two commands by the input device 17 to reflect the changed design on the models of the all applications derived from the product model as the basic shape.

Further, if a similar design to the product is made, a copy file is formed by copying the respective shape information files of the product to be referenced and changes are made to the copied files by uniformly controlling the respective shape information files which express the product similar to the product to be designed.

According to the CAD system of the embodiment, the following advantages are obtained:
(1) Models for each application can be effectively designed due to the storage of forming commands as the information for expressing the model shapes for all applications without redundancy upon designing a product or part. Thus, the labor costs and the development period can be reduced.
(2) Since the all information which expresses every application model shape, can be controlled uniformly, the designing of any resembled product or improvement of the product can be easily performed by only changing the forming commands corresponding to the change to be made. Thus the labor costs derived from the design changes can be significantly reduced.
(3) Since the information expressing the model shape for each application is uniformly stored in each file, a worker who is in charge of model forming can control the process by classifying any portion which can be changed in respective shape information files. Thus, the information to be changed can be clearly identified by the person assigned to change if any change has to be made to the shape, thereby effectively reducing correction errors derived from the change. This process will further lead to prevention of unnecessary changes to the mold processing due to the correction errors upon the shape change.

The above explained embodiment can be modified as follows:

Shape information files for each model derived from the product model as the basic shape can be included an information designating the shape information file for the product model from which the model is derived. By this modification, the model shape from which another model is derived can be easily established.

The forming command input from the input device 17 is stored in each shape information file immediately after being input according to the embodiment. However, the forming command immediately after being input may be temporally stored in a temporal file or a corresponding memory medium. In this case, it is preferable that the temporally stored forming commands are stored in each shape information files provided for a reserve purpose by the reserve indication from the input device 17.

Priority numbering can be added to the forming commands as the shape forming function information. In other words, by ordering the priority to a particular command, when the high priority command is stored, the low priority command can be invalidated.

Upon input operation of the forming command, the shape models of the input subject commands can be individually designated, or those shape models for the forming commands can be bundled after the input, individually designated or such designation can be changed.

The shape information files can be separately stored according to an embodiment. These files can be changed to be stored with a group, or a several groups. In this case, it is preferable that the grouped files can be parted in sections for each application, and the forming command is stored in each section corresponding to the command.

The data structure in the shape information files can be structured to include the information about the existence of the process element command associated with the forming command, or the information about the ID symbol of the process element command to the forming command (basic element command or process element command) with which the process element command is associated as the forming command expressing the shape forming function information.

By this data structure, the shape information control device 11 can ensure that any forming command associated with the forming command stored in the shape information files of the model derived therefrom from the forming command stored in the shape information files of the original model can not be deleted without a permission of the file managing person of the shape information files of the derived model.

The deriving relation of the shape model can be freely changed.

The data communication between the elements forming the CAD system as explained may be made by network such as LAN (Local Area Network) or Internet. The CAD system can be structured as a client/server system arranging the shape information control device 11 in a server.

The shape information control device 11 for processing the input/output and forming of shape data expressing a shape for each application of a product performs various procedures based on the input data from an input device 17 and outputs an obtained shape data to an output device 18. The device 11 refers to shape information files 12-16 for each shape expressing a product model as a product basic shape and other shape models, such as an analysis model derived from the product model. In these information files, a plurality of forming commands which express each shape are stored without redundancy. The device 11 further refers to a shape information file for expressing the product model as the basic shape in addition to the shape information file expressing the shape model. Thus by effectively controlling the shape of each desired model, a simple model forming can be made.

While the invention has been described with reference to what are preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

## Claims

1. A computer-aided-design system that forms a shape model to be used with a computer for applications relating to manufacturing of a product, **characterized in that**:
a plurality of shape forming function information having forming command (CL2) for the various shapes of the product to express the shape model (12M, 13M, 14M, 15M, 16M) for the applications is provided and the shape model (12M, 13M, 14M, 15M, 16M) is formed for the applications by selecting at least one of the plurality of shape forming function information.

2. The computer-aided-design system according to claim 1, **characterized in that** a shape of the shape model (13M, 14M, 15M, 16M) for the applications is defined by derivation from the basic shape (12M) and the shape forming function information of the shape model (13M, 14M, 15M, 16M) to be formed for the applications is defined by a set of forming commands (CL2) that correspond to the basic shape (12M) and a forming command (CL2) that corresponds to a shape (13M, 14M, 15M, 16M) derived from the basic shape.

3. The computer-aided-design system according to claim 2, **characterized in that** the set of the forming commands (CL2) that corresponds to the basic shape (12M) and the forming command (CL2) that corresponds to the shape (13M, 14M, 15M, 16M) derived from the basic shape (12M) are prepared in advance, a shape model (13M, 14M, 15M, 16M) to be formed is designated, and a combination of the set of the forming commands (CL2) and the forming command prepared in advance is automatically set as the shape forming function information.

4. The computer-aided-design system according to claim 2 or 3, **characterized in that** the set of the forming commands (CL2) that are prepared in advance by designating the shape model (12M, 13M, 14M, 15M, 16M) is stored in a location to be copied upon copying the shape model (12M, 13M, 14M, 15M, 16M) for each application.

5. A CAD system according to any one of claims 2 through 4, **characterized in that** the forming command (CL2) corresponding to the basic shape (12M) and the forming command (CL2) corresponding to the shape (13M, 14M, 15M, 16M) derived from the basic shape (12M) are stored in separate electronic files, respectively.

6. A method for using a computer-aided-design system that forms a shape model to be used with a computer for applications relating to manufacturing of a product, **characterized by** comprising:
forming a plurality of shape forming function information that have forming commands (CL2) for various shapes of the product to express the shape model (12M, 13M, 14M, 15M, 16M) for the applications,
wherein the shape model (12M, 13M, 14M, 15M, 16M) is formed for the applications by selecting at least one of the plurality of shape forming function information.
